# EUROPEAN PATENT APPLICATION

(11) **EP 1 529 612 A1**
(43) Date of publication of application: **11.05.2005**
(21) Application number: 04105623.5
(22) Date of filing: 09.11.2004
(51) Int. Cl.: B27G 13/00, B27G 13/10, B23C 5/24

(54) **Mechanical fastening device for blocking the blades of cutters, in particular for working wood**

(30) Priority: 10.11.2003 IT VR20030132
(71) Applicant: GARNIGA ENTERPRISE S.A.S. di Todisco Severino Ingrid e C., 38060 Isera (TN) (IT)
(72) Inventor: Garniga, Giorgio, 38060 Isera (TN) (IT)
(74) Representative: Petraz, Gilberto Luigi

(57) **Abstract**

A mechanical fastening device for blocking the blades (13) of cutters (10), in particular those used in working wood, comprising a plurality of anchors (14) designed to hold the respective blades (13) positioned in the housings (12) in the body (11) of the cutter, in which the anchor (14) is equipped with at least one magnetic element (16), which remains inserted and held in place in an appropriate housing in the anchor.

## Description

### TECHNICAL FIELD

This invention concerns a mechanical fastening device for blocking the blades of cutters, in particular those used in working wood or other materials.

More specifically, this invention refers to a mechanical fastening device with the particular feature of comprising means designed to make changing cutting tools easier.

This device which makes the use and maintenance of the tools easier foresees the use of appropriate magnetic components which are in the gripping piece or anchor, or in another appropriate position in the blade blocking parts.

This invention can be applied in the industry for the production of cutting tools or cutters designed for working wood or other materials.

### BACKGROUND ART

It is known that in the cutting tool industry there are numerous different applications that vary according to their type and to the type of assembly on the respective supports.

For the working of some supports, mainly those in wood, particular cutters are used, consisting of a substantially cylindrical or pyramid-shaped body on which the blades are fitted.

The blades, which can also be reversible, are fitted on the body of the cutter by means of a number of techniques, which mainly aim to ensure adequate blocking of the tool and at the same time allow the tool to be replaced when it is worn out or breaks, or also to invert it if it is the reversible type.

For this purpose, the blades are inserted in appropriate housings made in the body of the cutter and blocked by anchors held in place by screws arranged radially or at a tangent with respect to the piece.

It is known that in many cases two anchors are used for each blade, since in this way, according to some solutions, it is believed that tool blocking is even more secure and that the stress imparted during the working phases is absorbed better.

One disadvantage encountered with the use of these solutions concerns the fact that replacing damaged or worn blades or replacing all the blades when carrying out processes that require differently shaped blades involves numerous practical difficulties.

In particular, it is necessary first of all to loosen the anchor-tightening screws, which means that the anchor has to be firmly gripped to prevent it from falling, and then to remove the blade.

The procedure is then carried out in reverse order; the new blade is inserted in its housing with one hand while the anchor is inserted with the other, and finally, with fairly complex manual operations, the screws are inserted to block everything in place.

This type of intervention is further complicated if there are two anchors for each blade, with even more evident practical difficulties, above all if one considers that each cutter can be equipped with a number of blades, and replacing all of them means a considerable loss of time for the personnel and a relative increase in labour costs.

### DESCRIPTION OF THE INVENTION

This invention proposes to provide a mechanical fastening device for cutter blades, in particular for wood working or other materials, which is able to eliminate or at least reduce the disadvantages described above.

The invention also proposes to provide a mechanical fastening device for cutter blades which is easy to produce in order to be economically advantageous.

This is achieved by the use of a mechanical fastening device according to the invention, designed to hold and block the blades in place, the features of which are described in the main claim.

The dependent claims describe advantageous embodiments of the invention.

The mechanical fastening device according to the invention foresees that at least one magnetic attraction element, such as a magnet, fixed in an appropriate housing in the blade anchor, is used to allow the anchor to remain in place even when the screws are loosened and removed, thus preventing it from falling out.

The main advantages of this solution, in addition to those deriving from its construction simplicity, concern first of all a reduction in labour costs for the personnel involved in replacing the blades.

This is due to the fact that during the replacement or the inversion of the blade in the case of reversible blades, the anchor does not drop out of place but remains firmly held on the wall of its housing, so that the operator can work directly on the blade with both hands, with all the consequent practical advantages.

The magnetic element can also be inserted in another position close to the anchor, for example in the body of the cutter or in the body of the screws, or in any other more appropriate position according to requirements.

### DESCRIPTION OF THE DRAWINGS

Other features and advantages of the invention will become evident on reading the following description of one embodiment of the invention, given as a non-binding example, with the help of the drawings shown in the attached pages, in which:
- figure 1 represents a schematic cross-section view of a mechanical fastening device according to the invention, designed to block blades in place in a cutter;
- figure 2 shows a front view of the anchor and of the respective magnetic stop means according to the invention;

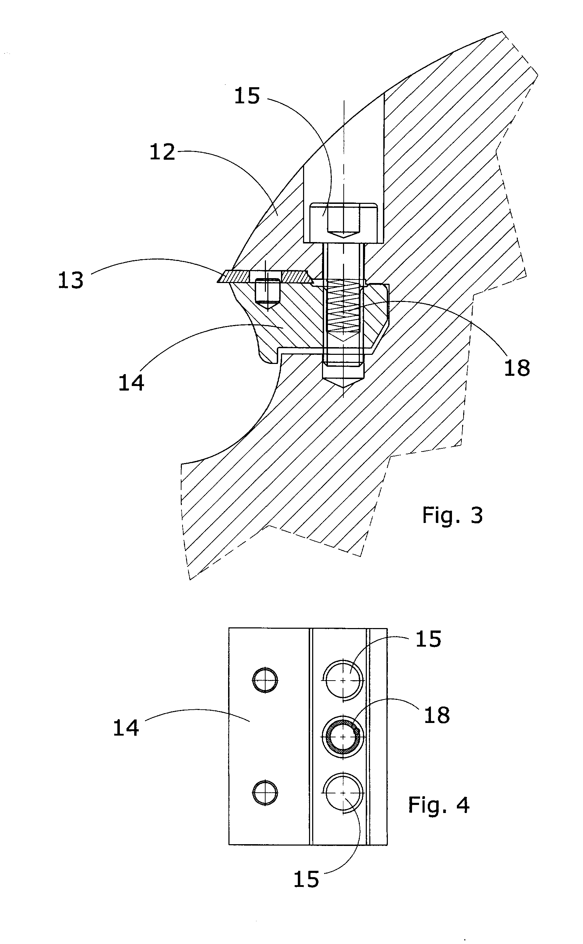

- figure 3 is a schematic cross-section view of a mechanical fastening device according to one embodiment of the invention;
- figure 4 shows a front view of the anchor according to the version shown in figure 3;
- figure 5 represents the axonometric view of the cutter and of the respective blades held in place by means of the anchors according to the invention.

### DESCRIPTION OF ONE EMBODIMENT OF THE INVENTION

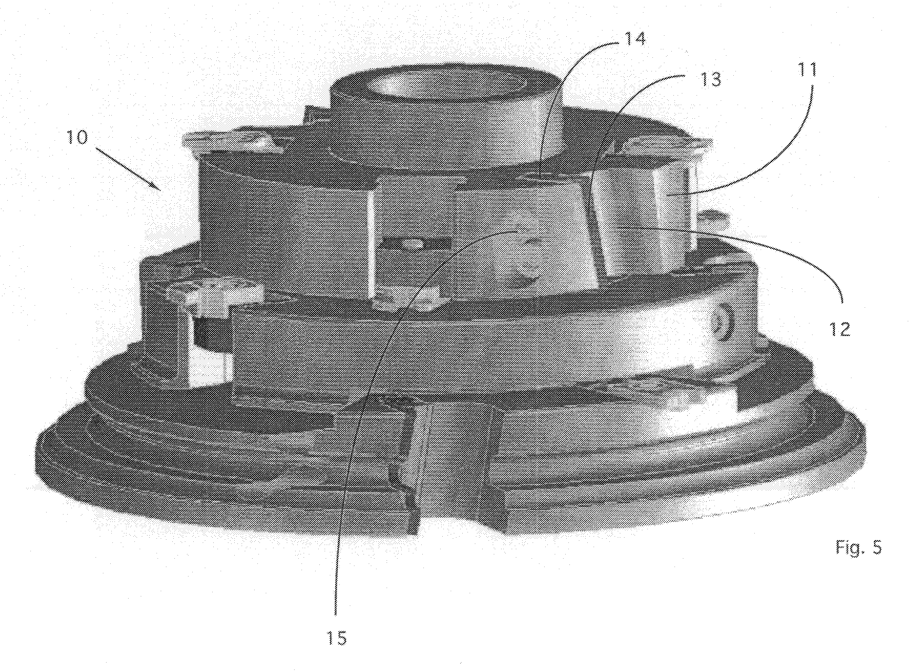

The mechanical fastening device according to the invention can be fitted on cutters 10 of the type shown in figure 5, that is to say with a substantially cylindrical or even truncated cone shaped body 11, with housings 12 in which the cutting tools or blades 13 are inserted.

The blades 13 are held in place by anchors 14 which are attached to the body 11 by means of screws 15, which can be positioned at a tangent to the body or radially.

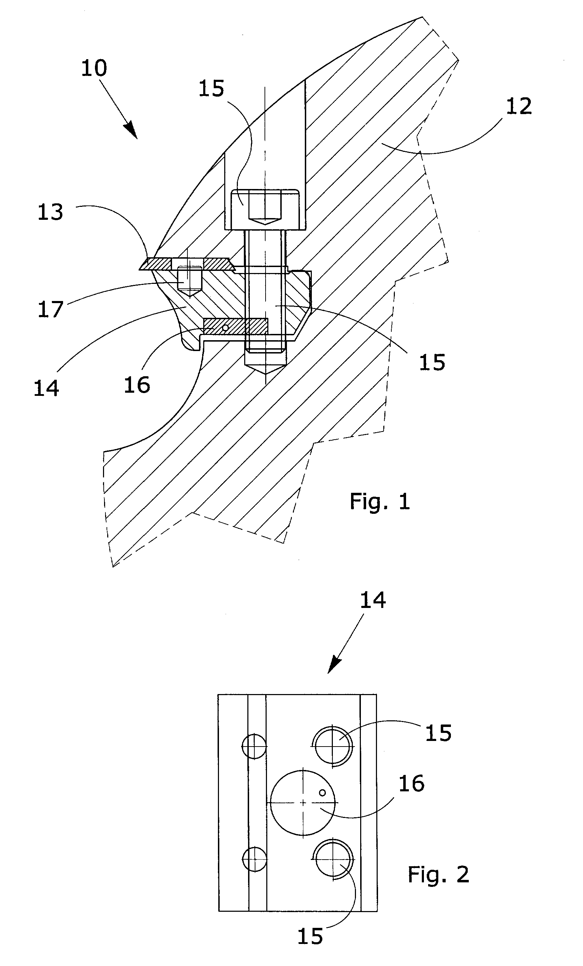

The particularity of the invention, as shown in figure 1, lies in the fact that the anchor 14 is equipped with a magnetic element 16, consisting of a magnet, which remains blocked in an appropriate housing.

More specifically, the anchor 14 presents a housing on the side opposite to the housing of the blade 13, and close to the inner wall of the body housing 12.

In this way, the magnetic element inserted in the anchor housing adheres to the opposite side of the body housing 12 with respect to the insertion zone of the blade 13.

It should also be noted that the anchor 14 is slightly narrower than the body housing 12. This means that when the screw 15 is tightened, it holds the blade 13 and the respective anchor in place, while when it is loosened the magnet 16 moves the anchor towards the opposite side of the body housing 12, thus releasing the blade 13.

At this point, the operator just has to extract the blade 13 without having to take care to hold the anchor which stays perfectly in place in its housing in the body 12.

To fit the new blade 13 the operator merely has to insert it in the space left open between the housing in the body 11 and the anchor, so that when the screws 15 have been inserted the former blocking situation is achieved.

It is thus evident that the blade replacement operations are made much easier, as there is no longer any need to pay attention to and hold the anchor to prevent it from falling.

The anchor 14 is also equipped with positioning and fixing pins 17 which are inserted in respective housings in the blade to further ensure the correct positioning of the parts.

According to another embodiment of the invention, as an alternative to the magnetic element 16, a spring system 18 can be used, which is inserted in an appropriate housing in the anchor 14.

In this situation, instead of exerting traction force as in the case of the magnet 16, the spring 18 exerts pressure, and for this reason is positioned on the side of the anchor 14 facing the blade.

Advantageously, instead of being housed in the anchor 14, it is also possible for the magnet to be inserted in a respective position inside the housing of the cutter body 12.

Alternatively, the magnet or spring can be inserted in another more appropriate position, even inside the screw fixing elements, obtaining similar results to those described above.

It can be seen that this system makes it possible to position the blade 13 and the anchor 14 in the housing of the body 11 without the presence of the screw, which shows a high level of safety.

Once the anchor 14 and the blade 13 have been positioned, there is all the time needed to insert the screws and to make sure that the previous operations have been carried out correctly.

This solves the traditional problems whereby if the positioning had to be done at the same time as insertion of the screws, as in currently used systems, there is the risk of positioning the components incorrectly with a consequent loss of time.

The invention is described above with reference to a preferred embodiment. It is nevertheless clear that the invention is susceptible to numerous variations within the framework of technical equivalents.

## Claims

1. A mechanical fastening device for blocking the blades (13) of cutters (10), in particular those used in working wood or other materials, comprising a plurality of anchors (14) designed to hold the respective blades (13) positioned in the housings (12) in the body (11) of the cutter, **characterised in that** the anchor (14) is equipped with at least one magnetic element (16), which remains inserted and held in place in an appropriate housing in the anchor.

2. A mechanical fastening device designed for blocking the blades of cutters according to the foregoing claim, **characterised in that** the anchor (14) presents a housing on the side opposite to the housing of the blade (13), and facing the respective inner wall of the housing in the body (11).

3. A mechanical fastening device designed for blocking the blades of cutters according to any of the foregoing claims, **characterised in that** the magnetic element inserted in the housing of the anchor (14) adheres to the opposite side of the body (11) with respect to the insertion zone of the blade (13).

4. A mechanical fastening device designed for blocking the blades of cutters according to any of the foregoing claims, **characterised in that** the anchor (14) is slightly narrower than the housing in the body (11).

5. A mechanical fastening device designed for blocking the blades of cutters according to any of the foregoing claims, **characterised in that** the anchors (14) are equipped with positioning and fixing pins (17) which are inserted in respective housings in the blade to further ensure correct positioning of the parts.

6. A mechanical fastening device designed for blocking the blades of cutters according to any of the foregoing claims, **characterised in that** according to one embodiment, instead of the magnetic element (16) a spring system (18) is used, being inserted in an appropriate respective housing in the anchor (14).

7. A mechanical fastening device designed for blocking the blades of cutters according to any of the foregoing claims, **characterised in that** instead of being housed in the anchor (14), the magnet is inserted in a respective housing in the body (11) of the cutter.

8. A mechanical fastening device designed for blocking the blades of cutters according to any of the foregoing claims, **characterised in that** the magnetic (16) or spring elements (18) can be inserted in another more appropriate position, also inside the screw fixing elements.
